# EUROPÄISCHE PATENTSCHRIFT

(11) **EP 2 433 769 B1**
(45) Veröffentlichungstag und Bekanntmachung des Hinweises auf die Patenterteilung: **03.04.2013**
(21) Anmeldenummer: 10180222.1
(22) Anmeldetag: 27.09.2010
(51) Int. Cl.: B27D 5/00, B27D 1/02

(54) **Vorrichtung und Verfahren zum Beschichten eines Werkstücks**
Device and process for coating a workpiece
Dispositif et procédé de revêtement de pièce à usiner

(43) Veröffentlichungstag der Anmeldung: 28.03.2012
(73) Patentinhaber: HOMAG Holzbearbeitungssysteme AG, 72296 Schopfloch (DE)
(72) Erfinder: Gauß Achim, 72280 Dronstetten (DE)
(74) Vertreter: HOFFMANN EITLE

(56) Entgegenhaltungen:
- EP-A2- 0 169 188
- DE-U1-202008 015 878
- DE-U1-202009 009 253
- GB-A- 1 102 079
- US-A- 4 076 569

## Beschreibung

### Technische Gebiet

Die vorliegende Erfindung bezieht sich auf ein Verfahren gemäß dem Oberbegriff des Anspruchs 8 und eine Vorrichtung gemäß dem Oberbegriff des Anspruchs 1 zum Beschichten eines Werkstücks.

Eine solche Vorrichtung ist aus US 4 076 569 A1 bekannt.

Ein solches Verfahren ist aus GB 1 102 079 A1 bekannt.

### Stand der Technik

In der Oberflächenveredelung, insbesondere von plattenförmigen Werkstücken für die Möbelindustrie, ist ein Verfahren bekannt, in dem Materialbahnen, insbesondere Dekorpapiere, außerhalb einer Kaschieranlage vorab mit Klebstoff beschichtet und technologisch so behandelt werden, dass eine Lagerung im aufgewickelten Zustand über längere Zeit oder eine unmittelbare Konfektionierung auf einer Schneidemaschine möglich ist.

Ein technischer Aufwand bei diesem Verfahren begründet sich aus der notwendigen Abkühlung der Klebstoffbeschichtung bis unterhalb der Reaktionstemperatur, um zu verhindern, dass sich der Klebstoff beim Aufwickeln der Beschichtungsfolie mit der darunterliegenden Beschichtungsmaterialbahnseite verbindet (Verblockung). Aggregate oder Maschinen für dieses Verfahren sind auf Grund der notwendigen Abkühlstrecken räumlich sehr groß.

Es besteht zusätzlich das Problem, dass die mit Klebstoff versehene Beschichtungsfolie auf einer bestimmten Strecke nur auf der dem Klebstoff abgewandten Seite geführt oder deren Richtung über Umlenkwalzen geändert werden kann. Auf Grund der Restklebrigkeit der herkömmlichen Klebstoffe besteht auch bei niedrigen Temperaturen die Gefahr der Beschädigung des Klebstofffilms, wenn Führungselemente oder Rollen die Beschichtungsseite berühren.

Diese Technologie stellt außerdem für den Anwender aus energetischer und umwelttechnischer Sicht ein Problem dar. Zunächst muss nämlich der Schmelzklebstoff mit großem Energieeintrag geschmolzen werden, um dann in heißem Zustand mit Hilfe einer beheizten Auftragsdüse aufgetragen zu werden. Anschließend wird mit einem erheblichen Energieaufwand der Klebstofffilm so schnell wie möglich bis unter die Reaktionstemperatur herunter gekühlt, um die Beschichtungsfolie aufwickeln oder auf Schneidegeräten konfektionieren zu können. In diesem Prozess treten nicht selten Temperaturspannen von bis zu 150 °C auf.

Es besteht ferner das Problem, dass handelsübliche EVA-Klebstoffe auch bei Temperaturen von 25 - 50 °C immer noch eine gewisse Restklebrigkeit besitzen und somit eine Rückkühlung bis unter diese Temperatur erforderlich ist. Eine Restgefahr der Verblockung, insbesondere bei hohen Lagertemperaturen besteht dennoch.

Im Stand der Technik der Flächenkaschierung in der Möbelindustrie sind Klebstoffauftragsmengen von 50 -60 g/m² üblich. Geringere Auftragsmengen haben sehr oft Einbußen in der Qualität des Klebstofffilms zur Folge.

Die Patentschrift US 4,076,569 bildet die Basis für den Oberbegriff der unabhängigen Ansprüche der vorliegenden Erfindung und offenbart ein Verfahren und eine Vorrichtung zum Aufbringen eines thermoplastischen Kunststoffes auf die Oberfläche von Schaltungsplatten minderer Qualität, um eine glatte Oberfläche auszubilden, die zur Verwendung in Betonformen oder ähnlichem geeignet ist.

Die GB 1,102,079 offenbart die Herstellung eines Schleifprodukts durch zumindest teilweises Aufschmelzen eines geschäumten Polyurethans, Aufbringen eines pulverförmigen Schleifmaterials auf die geschmolzene Schicht und Setzenlassen der geschmolzenen Schicht.

### Darstellung der Erfindung

Es ist daher Aufgabe der vorliegenden Erfindung ein Verfahren und eine Vorrichtung zum Beschichten eines Werkstücks mit Materialbahnen zur Verfügung zu stellen, das es ermöglicht, Materialbahnen kurz nach dem Versehen mit Klebstoff einfach zu Handhaben und für ein Auftragen auf ein Werkstück bereitzustellen. Die Vorrichtung soll dabei technisch einfach und kompakt gestaltet sein.

Erfindungsgemäß wird diese Aufgabe durch eine Vorrichtung und ein Verfahren zum Beschichten eines Werkstücks mit den Merkmalen der unabhängigen Patentansprüche gelöst. In den Unteransprüchen finden sich vorteilhafte Ausgestaltungen und Verbesserungen der Erfindung.

Eine erfindungsgemäße Vorrichtung zum Beschichten eines Werkstücks weist zur Zuführung einer Materialbahn mindestens ein Umlenkmittel auf, hinter dem ein Andruckmittel zum Aufbringen der Materialbahn auf die Werkstückoberfläche angeordnet ist. Andruck und Umlenkmittel sind besonders bevorzugt Rollen bzw. Walzen, können aber auch als Schuhe und dergleichen ausgeführt sein.

Die Vorrichtung weist ferner mindestens eine Energiequelle auf, deren Wirkstelle sich im Bereich des Andruckmittel befindet, insbesondere in einem Bereich des Andruckmittels, der zumindest abschnittsweise in Kontakt mit der Materialbahn steht. Über die Wirkstelle wird Energie in die Materialbahn eingebracht. Dies dient der Aktivierung des Klebstoffs, der an der Materialbahn vorgesehen ist. Wird die Materialbahn dann mit dem aktivierten Klebstoff mittels des Andruckmittels auf die Werkstüokoberfläche aufgebracht, kann die Materialbahn mit dem Werkstück verklebt werden und so am Werkstück fixiert werden. Ein Vorteil der Vorrichtung liegt darin, dass eine an sich nicht klebrige Materialbahn, die ohne, dass sie sich verklebt aufrollbar ist, verwendet werden kann. Die Materialbahn ist vor der Aktivierung des Klebstoffs dadurch gut, z.B. mittels Rollen, umlenkbar ohne dass sie anhaftet. Der Klebstoff ist bevorzugt eine Schicht auf der Materialbahn, kann aber auch Bestandteil der Materialbahn sein.

Die Materialbahn kann im Rahmen der Erfindung beispielsweise endlos oder in Form von Abschnitten bereitgestellt werden. Ferner kann die Materialbahn im Rahmen der Erfindung beispielsweise als flächiges Element oder als (Kanten-)Streifen vorgesehen sein.

Gemäß einer bevorzugten Ausführungsform ist mindestens eine Energiequelle im Bereich des Andruckmittels angeordnet oder wirkt in diesem Bereich und ist so ausgelegt, dass sie das Andruckmittel vorzugsweise auf eine Aktivierungs- und/oder Verarbeitungstemperatur von 100°C bis 200°C aufheizt. Besonders bevorzugt ist dabei das Andruckmittel als beheizte Walze ausgeführt. Dadurch wird eine besonders gleichmäßige Temperaturverteilung im Andruckmittel und ein gleichmäßiger effizienter Temperatureintrag in die Materialbahn ermöglicht.

Gemäß einer bevorzugten Ausführungsform ist dem Andruckmittel vorgeschaltet, bevorzugt dem Umlenkmittel nachgeschaltet, eine Klebstoffauftragsvorrichtung angeordnet. Die Klebstoffauftragsvorrichtung weist bevorzugt eine Düse zum Auftrag einer Klebstoffschicht auf die Materialbahn auf. Die Klebstoffauftragsvorrichtung ist dabei so gestaltet, dass sie den Auftrag geringer Klebstoffmengen ermöglicht, vorzugsweise von unter 30g/m^2. Die geringen Klebstoffmengen erlauben ein sehr dichtes Anliegen der Materialbahn an der Werkstückoberfläche. Düsen sind hierzu besonders geeignet, da sie eine gleichmäßige Aufbringung von flüssigem Klebstoff in geringen Mengen ermöglichen. Ferner ermöglichen die geringen Auftragsmengen in Zusammenhang mit den Eigenschaften des Klebstoffs die Führung und Umlenkung der Materialbahn auf der mit Klebstoff beschichteten Seite.

Gemäß einer bevorzugten Weiterbildung der vorliegenden Erfindung ist zwischen der Klebstoffauftragsvorrichtung und dem Andruckmittel eine Kühleinrichtung, insbesondere eine Hohlwelle, angeordnet, in deren Oberfläche Löcher eingebracht sind, so dass die Hohlwelle von einer Zugangsöffnung bis zur Oberfläche durchlässig gestaltet ist. Die Hohlwelle ermöglicht es Luft, die durch die Zugangsöffnung in die Hohlwelle eingespeist wird, durch die Löcher in ihrer Oberfläche auszustoßen. Dadurch kann die Klebstoffschicht kurz nach ihrem Auftrag auf die Materialbahn noch einmal abgekühlt werden. Die Belüftung der Materialbahn erfolgt dabei bevorzugt Klebstoffschichtseitig. Mittels der Kühleinrichtung kann die erforderliche Abkühltransportstrecke für die Materialbahn verkürzt werden, was eine kompaktere Vorrichtungsgestaltung und einen geringeren Platzbedarf ermöglicht. Ferner wird auf Grund der kürzeren erforderlichen Transportzeit ein schnellerer Prozessablauf ermöglicht.

Erfindungsgemäß ist ein verschiebbares Umlenkmittel vorzugsweise senkrecht zur Werkstückoberfläche automatisch und/oder manuell verschiebbar gelagert, so dass es eine Verstellung des Umschlingungswinkels von vorzugsweise 135° bis 225° ermöglicht. Über die Größe des Umschlingungswinkels kann der Energieeintrag über die Andruckwalze in die Materialbahn bzw. die Klebstoffschicht verändert werden. Ein größerer Umschlingungswinkel bedeutet dabei eine größere Anlagefläche der Materialbahn an der Andruckwalze und damit einen größeren Wärmeübertrag von der Andruckwalze auf die Materialbahn. Über den Umschlingungswinkel kann somit die Aktivierung der Klebstoffschicht genau eingestellt werden. Das Umlenkmittel ist bevorzugt so relativ zum Andruckmittel angeordnet, dass die Materialbahn über die Klebstoffschicht mit dem verschiebbaren Umlenkmittel in Kontakt kommt.

Als Energiequellen können bevorzugt direkte Energiequellen, vorzugsweise Heißluft-, Plasma-, Infrarot- und/oder Laserquellen, oder indirekte Energiequellen, vorzugsweise beheizte Körper, wie Schuhe, Rollen und/oder Walzen, in der Vorrichtung zum Einsatz kommen. Denkbar sind beispielsweise auch bevorzugt fokussierte Halogenlichtquellen. Die direkten Energiequellen bieten dabei den Vorteil einer lagetoleranten Energieübertragung, d.h. der Energieübertrag ist gut möglich auch wenn sich die Lage der Materialbahn, z.B. auf Grund einer Materialumstellung verändert. Die direkten Energiequellen bieten den Vorteil, dass eine Eunktionsintegration von Energiequelle und Umlenkung bzw. Führung der Materialbahn realisierbar ist. Ferner ermöglichen Sie eine bessere Speicherung der Energie und damit geringere Temperaturschwankungen. Ferner ist bei ihnen die Energieübertragung gegenüber äußeren Einflüssen, wie z.B. Zugluft unempfindlicher. Bevorzugt kommt eine Ölheizung mit Heizstäben zum Einsatz, die den elektrischen Energiebedarf der Anlage senkt und eine geringere elektrische Anschlussleistung ermöglicht.

Ein erfindungsgemäßes Verfahren zum Beschichten eines Werkstücks mit einer Materialbahn unter Verwendung der Vorrichtung aus einem der vorhergehenden Ansprüche weist die in Anspruch 8 definierten Verfahrenschritte auf.

Durch das Verfahren ist es möglich, die Materialbahn kurz nach dem Klebstoffauftrag auch an der Klebstoffauftragsseite zu handhaben. Die Abkühlförderstrecken können verkürzt werden. Damit kann das Verfahren auf sehr kompaktem Raum ausgeführt werden. Ferner kann die mit Klebstoff beschichtete Materialbahn gelagert werden, da der Klebstoff nicht verblockt und im nachfolgenden Kaschierprozess reaktiviert wird. Die Zeitdauer nach dem Auftrag des Klebstoffs kann dabei auch länger sein.

### Kurze Beschreibung der Zeichnung

Die Erfindung wird im Folgenden anhand von Ausführungsbeispielen unter Bezugnahme auf die beiliegende Figur der Zeichnung näher erläutert.

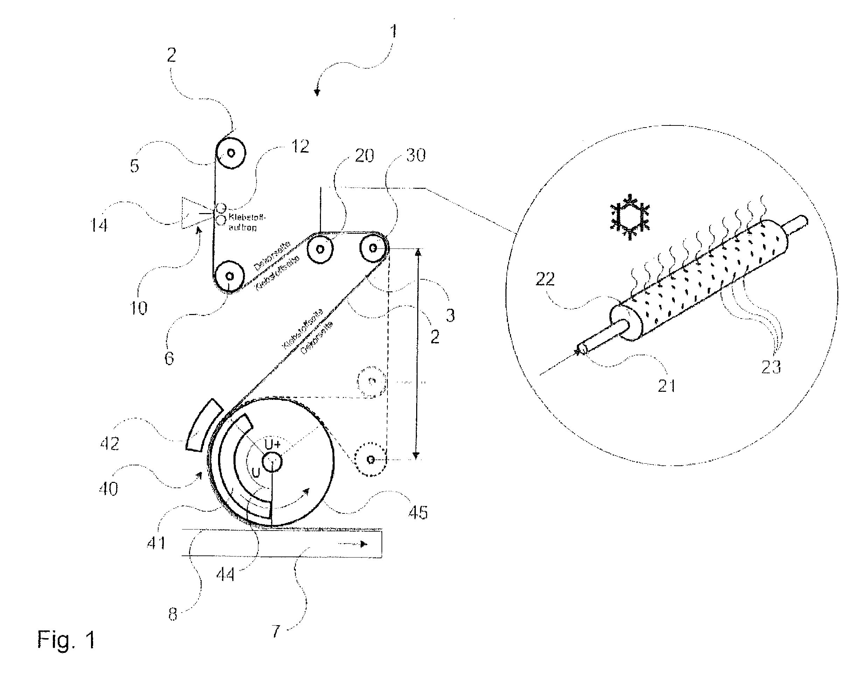

- Fig. 1: eine schematische Darstellung einer Ausführungsform der Vorrichtung zum Beschichten eines Werkstücks.

### Ausführliche Beschreibung der bevorzugten Ausführungsformen

Fig. 1 zeigt eine schematische Darstellung einer Ausführungsform der Vorrichtung 1 zum Beschichten eines Werkstücks 7.

Eine Materialbahn 2 wird der Vorrichtung 1 zum Beschichten eines Werkstücks 7 von oben im Bild kommend zugeführt, um auf das unten im Bild angeordnete Werkstück 7 aufgebracht zu werden. Die Materialbahn 2 wird bei diesem Ausführungsbeispiel kontinuierlich auf das Werkstück 7 aufgebracht, das dabei von links nach rechts im Bild bewegt wird.

Die Materialbahn kann im Rahmen der Erfindung beispielsweise endlos oder in Form von Abschnitten bereitgestellt werden. Ferner kann die Materialbahn im Rahmen der Erfindung beispielsweise als flächiges Element oder als (Kanten-)Streifen vorgesehen sein. Dabei kann die Materialbahn ganz oder teilweise mit Klebstoff vorbeschichtet sein und/oder erst in der Vorrichtung mit Klebstoff versehen werden.

Die Vorrichtung 1 weist Umlenkmittel 5, 6, 30, bei diesem Ausführungsbeispiel in Form von Umlenkrollen auf, die der Führung und Richtungsgebung der Materialbahn 2 dienen. Den Umlenkmitteln 5, 6, 30 nachgeschaltet ist ein Andruckmittel 40, das bei diesem Ausführungsbeispiel als Andruckwalze ausgebildet ist, zum Aufbringen der Materialbahn 2 auf die Werkstückoberfläche 8 angeordnet.

Bei der Werkstückoberfläche kann es sich beispielsweise um eine Schmal- oder Breitfläche, aber auch um jede andere Art von Oberfläche handeln.

Eine Klebstoffauftragsvorrichtung 10 ist zum Auftrag einer Klebstoffschicht 3 auf die Materialbahn 2 vorgesehen. Die Klebstoffauftragsvorrichtung 10 weist bei diesem Ausführungsbeispiel ein Leimauftragsmittel, insbesondere eine Düse 14 zum Auftrag der Klebstoffschicht 3 auf. Ein Führungsmittel 12 dient zur Lagenjustierung der Materialbahn 2. Die Klebstoffauftragsvorrichtung 10 ermöglicht den Auftrag geringer Klebstoffmengen von unter 30g/m^2.

Bei dem Haftmittel handelt es sich im Rahmen der Erfindung bevorzugt um einen thermoplastischen Klebstoff, insbesondere Schmelzkleber. Dabei kann es sich auch um Klebstoffe handeln, die zunächst thermoplastisch sind, beispielsweise im Zuge der Aktivierung oder Reaktivierung ihre Eigenschaften ändern und beispielsweise duroplastisch werden.

Zwischen der Klebstoffauftragsvorrichtung 10 und dem Andruckmittel 40 ist eine Kühleinrichtung 20, die bei diesem Ausführungsbeispiel als Hohlwelle ausgeführt ist, angeordnet. Die Hohlwelle 20 ist rechts in Fig. 1 noch einmal als Detailvergrößerung dargestellt. Die Hohlwelle 20 weist in deren Oberfläche 22 Löcher 23 auf, so dass die Hohlwelle 20 von einer Zugangsöffnung 21 bis zur Oberfläche 22 durchlässig gestaltet ist. Die Hohlwelle 20 ermöglicht es dadurch, Luft, die durch die Zugangsöffnung 21 in die Hohlwelle 20 eingespeist wird, durch die Löcher 23 in ihrer Oberfläche 22 auszustoßen. Dadurch kann die Klebstoffschicht 3 kurz nach ihrem Auftrag auf die Materialbahn 2 noch einmal abgekühlt werden. Die Belüftung der Materialbahn 2 erfolgt dabei Klebstoffschichtseitig.

Bei diesem Ausführungsbeispiel sind zwei Energiequellen 41, 42 zur Erwärmung der Materialbahn 2 vorgesehen. Eine Energiequelle 42 ist außerhalb der Andruckwalze 40 und eine weitere Energiequelle 41 innerhalb der Andruckwalze 40 vorgesehen. Erfindungsgemäß kann natürlich auch nur eine von beiden Energiequellen in der Vorrichtung 1 zum Beschichten eines Werkstücks 7 vorgesehen sein. Die Energiequellen 41, 42 weisen eine Wirkstelle auf, die sich im Bereich des Andruckmittels 40 befindet. Bei diesem Ausführungsbeispiel steht die Wirkstelle zumindest abschnittsweise in Kontakt mit der Materialbahn 2. Dadurch kann die Materialbahn erwärmt werden und der Klebstoff, der sich bei diesem Ausführungsbeispiel auf der Materialbahn befindet, kann aktiviert werden.

Bei der Vorrichtung 1 zum Beschichten eines Werkstücks 7 gemäß diesem Ausführungsbeispiel ist das Umlenkmittel 30 verlagerbar, insbesondere verschiebbar, angeordnet, und kann vorzugsweise senkrecht zur Werkstückoberfläche 8 verlagert werden. Durch das so verlagerbare Umlenkmittel 30 kann eine Verstellung des Umschlingungswinkels 44, das heißt des Winkels, an dem die Materialbahn 2 an der Andruckwalze 40 anliegt, ermöglicht werden. Bei diesem Ausführungsbeispiel wird ein einstellbarer Winkel von 135° bis 225° ermöglicht. Über die Größe des Umschlingungswinkels 44 kann der Energieeintrag über die Andruckwalze 40 in die Materialbahn 2 bzw. die Klebstoffschicht 3 verändert werden. Damit kann die Aktivierung der Klebstoffschicht 3 genau eingestellt werden.

### Bezugszeichenliste

- 1: Vorrichtung zum Beschichten eines Werkstücks
- 2: Materialbahn
- 3: Klebstoffschicht
- 5, 6: Umlenkmittel
- 7: Werkstück
- 8: Werkstückoberfläche
- 10: Klebstoffauftragsvorrichtung
- 12: Führungsmittel
- 14: Düse
- 20: Kühleinrichtung
- 21: Zugangsöffnung
- 22: Oberfläche
- 23: Löcher
- 30: verschiebbares Umlenkmittel
- 40: Andruckmittel
- 41, 42: Energiequelle
- 44: Umschlingunswinkel
- 45: Oberfläche des Andruckmittels

## Patentansprüche

1. Vorrichtung (1) zum Beschichten eines Werkstücks (7), die zur Zuführung einer Materialbahn (2) mindestens ein Umlenkmittel (5, 6, 30) aufweist, hinter dem ein Andruckmittel (40) zum Aufbringen der Materialbahn (2) auf die Werkstückoberfläche (8) angeordnet ist und
die Vorrichtung ferner mindestens eine Energiequelle (41, 42) aufweist, deren Wirkstelle sich in einem Bereich des Andruckmittels befindet, der zumindest abschnittsweise in Kontakt mit der Materialbahn (2) steht
**dadurch gekennzeichnet, dass**
ein verschiebbares Umlenkmittel (30) zur Werkstückoberfläche (8) automatisch und/oder manuell verschiebbar gelagert ist, so dass es eine Verstellung des Umschlingungswinkels (44) ermöglicht.

2. Vorrichtung zum Beschichten einer Werkstückoberfläche nach Anspruch 1, **dadurch gekennzeichnet, dass**
mindestens eine Energiequelle (41, 42) im Bereich des Andruckmittels (40) angeordnet ist oder in diesem Bereich wirkt und so ausgelegt ist, dass sie das Andruckmittel (40) vorzugsweise auf eine Aktivierungs- und/oder Verarbeitungstemperatur von 100°C bis 250°C aufheizt.

3. Vorrichtung zum Beschichten einer Werkstückoberfläche nach Anspruch 1 oder 2, **dadurch gekennzeichnet, dass** vorgeschaltet dem Andruckmittel (40), bevorzugt nachgeschaltet dem Umlenkmittel (5), eine Klebstoffauftragsvorrichtung (10) angeordnet ist, die bevorzugt eine Düse (14) zum Auftrag einer Klebstoffschicht (3) auf die Materialbahn (2) umfasst, wobei die Klebstoffauftragsvorrichtung (10) so gestaltet ist, dass sie den Auftrag geringer Klebstoffmengen ermöglicht, vorzugsweise von unter 30g/m^².

4. Vorrichtung zum Beschichten einer Werkstückoberfläche nach Anspruch 3, **dadurch gekennzeichnet, dass**
zwischen der Klebstoffauftragsvorrichtung (10) und dem Andruckmittel (40) eine Kühleinrichtung (20), insbesondere eine Hohlwelle, angeordnet ist, in deren Oberfläche (22) Löcher (23) eingebracht sind, so dass die Hohlwelle (20) von einer Zugangsöffnung (21) bis zur Oberfläche (22) durchlässig gestaltet ist.

5. Vorrichtung zum Beschichten einer Werkstückoberfläche nach einem der vorhergehenden Ansprüche, **dadurch gekennzeichnet, dass**
die Andruck- und Umlenkmittel Rollen, Walzen und/oder Schuhe umfassen.

6. Vorrichtung zum Beschichten einer Werkstückoberfläche nach einem der vorhergehenden Ansprüche, **dadurch gekennzeichnet, dass**
das verschiebbares Umlenkmittel (30) senkrecht zur Werkstückoberfläche (8) gelagert ist und/oder eine Verstellung des Umschlingungswinkels (44) von vorzugsweise 135° bis 225° ermöglicht, wobei das verschiebbare Umlenkmittel (30) bevorzugt so relativ zum Andruckmittel (40) angeordnet ist, dass die Materialbahn (2) über die Klebstoffschicht (3) mit dem verschiebbaren Umlenkmittel (30) in Kontakt kommt.

7. Vorrichtung zum Beschichten einer Werkstückoberfläche nach einem der vorhergehenden Ansprüche, **dadurch gekennzeichnet, dass**
als Energiequellen direkte Energiequellen, vorzugsweise Heißluft-, Plasma-, Infrarot- und/oder Laserquellen, oder indirekte Energiequellen, vorzugsweise beheizte Körper wie Schuhe, Rollen und/oder Walzen, in die Vorrichtung (1) integriert sind.

8. Verfahren zum Beschichten eines Werkstücks (7) mit einer Materialbahn (2) unter Verwendung der Vorrichtung aus einem der vorhergehenden Ansprüche, wobei das Verfahren folgende Schritte umfasst:
- Zuführen des Werkstücks (7) und der Materialbahn (2) in eine Beschichtungsvorrichtung (1) über mindestens ein Umlenkmittel (5, 6),
- Aktivieren einer Klebstoffschicht (3), die sich auf der Materialbahn (2) befindet und/oder ein Teil von ihr ist, und
- Aufbringen der Materialbahn (2) auf die Werkstückoberfläche (8) durch die aktivierte Klebstoffschicht (3) mit Hilfe mindestens eines Andruckmittels (40),
wobei die Klebstoffschicht unmittelbar vor dem Aufbringen der Materialbahn (2) im Bereich der Oberfläche (45) des Andruckmittels (40) mit mindestens einer Energiequelle aktiviert und/oder reaktiviert wird, wobei im Bereich der Oberfläche (45) des Andruckmittels (40) bedeutet, dass der Teil der Materialbahn (2) aktiviert wird, der zumindest abschnittweise in Kontakt mit dem Andruckmittel (40) steht,
**dadurch gekennzeichnet, dass**
durch das Positionieren eines verstellbaren Umlenkmittels (30) relativ zum Andruckmittel (40) eine Veränderung der Kontaktfläche der Materialbahn (2) mit dem Andruckmittel (40) über einen Umschlingungswinkel (44) erfolgt.

9. Verfahren zum Beschichten einer Werkstückoberfläche nach Anspruch 8, **dadurch gekennzeichnet, dass** thermoplastischer Klebstoff, insbesondere Schmelzkleber eingesetzt wird.

10. Verfahren zum Beschichten einer Werkstückoberfläche nach Anspruch 8 oder 9, **dadurch gekennzeichnet, dass**
die Klebstoffschicht (3) nach Zuführung der Materialbahn (2) mit einer Klebstoffauftragsvorrichtung (10) appliziert wird, wobei die Klebstoffschicht (3) vorzugsweise mit einer Düse (14) in Mengen von weniger als 30 g/m^2 auf die Materialbahn (2) aufgetragen wird.

11. Verfahren zum Beschichten einer Werkstückoberfläche nach Anspruch 10, **dadurch gekennzeichnet, dass**
nach dem Auftrag der Klebstoffschicht (3) die Materialbahn (2) mit der Seite der aufgebrachten Klebstoffschicht (3) über eine Kühleinrichtung zur zusätzlichen Kühlung (20), insbesondere eine Hohlwelle, geführt wird, wobei die Klebstoffschicht (3) über Löcher (23) in der Oberfläche (22) der Hohlwelle (20) angeblasen wird, vorzugsweise mit getrockneter ölfreier Druckluft.

12. Verfahren zum Beschichten einer Werkstückoberfläche nach einem der Ansprüche 8 bis 11, **dadurch gekennzeichnet, dass**
die Materialbahn (2) mit der Klebstoffschichtseite über das Umlenkmittel (30) geführt wird.

13. Verfahren zum Beschichten einer Werkstückoberfläche nach einem der Ansprüche 8 bis 12, **dadurch gekennzeichnet, dass**
das Andruckmittel (40) über mindestens eine Energiequelle auf eine für die Aktivierung der Klebstoffschicht (3) und anschließende Applikation der Materialbahn (2) günstige Temperatur aufgeheizt wird, vorzugsweise auf 100°C bis 250°C.

14. Verfahren zum Beschichten einer Werkstückoberfläche nach einem der Ansprüche 8 bis 13, **dadurch gekennzeichnet, dass**
das Verfahren für Breitflächen, für Schmalflächen, für eine im gleichen Arbeitsgang durchgeführte Beschichtung von Breit- und Schmalflächen oder im Rahmen einer Profilummantelung eingesetzt werden kann, bevorzugt in Stationärmaschinen wie insbesondere Membranpressen oder in Durchlaufmaschinen.

## Claims

1. Device (1) for coating a workpiece (7) which has for feeding a material web (2) at least one deflecting means (5, 6, 30), behind which a pressure means (40) for applying the material web (2) to the workpiece surface (8) is arranged and the device further has at least one energy source (41, 42), the point of action of which is located in a region of the pressure means which is in contact with the material web (2) at least in some sections, **characterised in that** a displaceable deflecting means (30) is mounted to be automatically and/or manually displaceable with respect to the workpiece surface (8) so that it facilitates adjustment of the wrap angle (44).

2. Device for coating a workpiece surface according to claim 1, **characterised in that** at least one energy source (41, 42) is arranged in the region of the pressure means (40) or acts in this region and is designed so that it heats the pressure means (40) preferably to an activation temperature and/or processing temperature of 100°C to 250°C.

3. Device for coating a workpiece surface according to claim 1 or 2, **characterised in that** an adhesive application device (10) is arranged upstream of the pressure means (40), preferably downstream of the deflecting means (5) and preferably comprises a nozzle (14) for application of an adhesive layer (3) to the material web (2), wherein the adhesive application device (10) is designed so that it facilitates the application of small quantities of adhesive, preferably of below 30 g/m².

4. Device for coating a workpiece surface according to claim 3, **characterised in that** a cooling device (20), in particular a hollow shaft, in the surface (22) of which holes (23) are introduced, is arranged between the adhesive application device (10) and the pressure means (40) so that the hollow shaft (20) is designed to be permeable from an access opening (21) as far as the surface (22).

5. Device for coating a workpiece surface according to one of the preceding claims, **characterised in that** the pressure means and deflecting means comprise cylinders, rollers and/or shoes.

6. Device for coating a workpiece surface according to one of the preceding claims, **characterised in that** the displaceable deflecting means (30) is mounted to be vertical to the workpiece surface (8) and/or facilitates adjustment of the wrap angle (44) from preferably 135° to 225°, wherein the displaceable deflecting means (30) is preferably arranged relative to the pressure means (40) so that the material web (2) comes into contact with the displaceable deflecting means (30) via the adhesive layer (3).

7. Device for coating a workpiece surface according to one of the preceding claims, **characterised in that** direct energy sources, preferably hot-air, plasma, infrared and/or laser sources, or indirect energy sources, preferably heated bodies, such as shoes, cylinders and/or rollers, are integrated into the device (1) as energy sources.

8. Method for coating a workpiece (7) with a material web (2) using the device from one of the preceding claims, wherein the method comprises the following steps:
- feeding the workpiece (7) and the material web (2) into a coating device (1) via at least one deflecting means (5, 6),
- activating an adhesive layer (3) which is located on the material web (2) and/or is a part of it, and
- applying the material web (2) to the workpiece surface (8) by means of the activated adhesive layer (3) with the aid of at least one pressure means (40),
wherein the adhesive layer is activated and/or reactivated immediately before application of the material web (2) in the region of the surface (45) of the pressure means (40) using at least one energy source, wherein in the region of the surface (45) of the pressure means (40) means that the part of the material web (2) is activated which is in contact with the pressure means (40) at least in some sections, **characterised in that** by positioning an adjustable deflecting means (30) relative to the pressure means (40), a change in the contact surface of the material web (2) with the pressure means (40) is effected via a wrap angle (44).

9. Method for coating a workpiece surface according to claim 8, **characterised in that** thermoplastic adhesive, in particular hot-melt adhesive, is used.

10. Method for coating a workpiece surface according to claim 8 or 9, **characterised in that** the adhesive layer (3) is applied using an adhesive application device (10) after feeding the material web (2), wherein the adhesive layer (3) is applied to the material web (2) preferably using a nozzle (14) in quantities of less than 30 g/m².

11. Method for coating a workpiece surface according to claim 10, **characterised in that** after application of the adhesive layer (3), the material web (2) is guided with the side of the applied adhesive layer (3) over a cooling device to additional cooling (20), in particular a hollow shaft, wherein the adhesive layer (3) is blown in via holes (23) in the surface (22) of the hollow shaft (20), preferably using dried oil-free compressed air.

12. Method for coating a workpiece surface according to one of claims 8 to 11, **characterised in that** the material web (2) is guided with the adhesive layer side over the deflecting means (30).

13. Method for coating a workpiece surface according to one of claims 8 to 12, **characterised in that** the pressure means (40) is heated via at least one energy source to a temperature which is favourable for activation of the adhesive layer (3) and subsequent application of the material web (2), preferably to 100°C to 250°C.

14. Method for coating a workpiece surface according to one of claims 8 to 13, **characterised in that** the method may be used for wide surfaces, for narrow surfaces, for coating of wide surfaces and narrow surfaces carried out in the same working step or within the framework of profile covering, preferably in stationary machines, such as in particular membrane presses or in continuous machines.

## Revendications

1. Dispositif (1) pour le revêtement d'une pièce (7), lequel dispositif comporte pour l'amenée d'une bande de matériau (2) au moins un système de renvoi (5, 6, 30) derrière lequel est placé un système d'appui (40) pour appliquer la bande de matériau (2) sur la surface (8) de la pièce et
lequel dispositif comporte aussi au moins une source d'énergie (41, 42) dont la zone d'action se situe dans la zone du système d'appui qui est au moins par endroits en contact avec la bande de matériau (2), **caractérisé en ce que**
un système de renvoi (30) pouvant être déplacé est logé de manière à pouvoir être déplacé automatiquement et/ou manuellement par rapport à la surface (8) de la pièce de manière à permettre un réglage de l'angle d'enroulement (44).

2. Dispositif pour le revêtement d'une surface de pièce selon la revendication 1, **caractérisé en ce que**
au moins une source d'énergie (41, 42) est placée dans la zone du système d'appui (40) ou agit dans cette zone et est conçue de telle sorte qu'elle chauffe le système d'appui (40) de préférence à une température d'activation et/ou de traitement de 100 °C à 250 °C.

3. Dispositif pour le revêtement d'une surface de pièce selon la revendication 1 ou 2, **caractérisé en ce que**
un dispositif applicateur de colle (10) est placé en amont du système d'appui (40), de préférence en aval du système de renvoi (5), et comporte de préférence une buse (14) pour l'application d'une couche de colle (3) sur la bande de matériau (2), le dispositif applicateur de colle (10) étant conçu de telle sorte qu'il permet l'application de petites quantités de colle, de préférence moins de 30 g/m².

4. Dispositif pour le revêtement d'une surface de pièce selon la revendication 3, **caractérisé en ce que**
un dispositif de refroidissement (20), notamment un arbre creux, est placé entre le dispositif applicateur de colle (10) et le système d'appui (40), dispositif de refroidissement dans la surface (22) duquel sont pratiqués des trous (23) de telle sorte que l'arbre creux (20) est conçu perméable d'une ouverture d'entrée (21) jusqu'à la surface (22).

5. Dispositif pour le revêtement d'une surface de pièce selon l'une des revendications précédentes, **caractérisé en ce que**
les systèmes d'appui et de renvoi comprennent des rouleaux, des cylindres et/ou des patins.

6. Dispositif pour le revêtement d'une surface de pièce selon l'une des revendications précédentes, **caractérisé en ce que**
le système de renvoi (30) pouvant être déplacé est logé perpendiculairement à la surface (8) de la pièce et/ou permet un réglage de l'angle d'enroulement (44) de préférence de 135° à 225°, le système de renvoi (30) pouvant être déplacé étant placé de préférence de telle sorte par rapport au système d'appui (40) que la bande de matériau (2) vient en contact par l'intermédiaire de la couche de colle (3) avec le système de renvoi (30) pouvant être déplacé.

7. Dispositif pour le revêtement d'une surface de pièce selon l'une des revendications précédentes, **caractérisé en ce que** des sources d'énergie directes, de préférence des sources d'air chaud, de plasma, d'infrarouge et/ou de laser, ou des sources d'énergie indirectes, de préférence des corps chauffés tels que patins, rouleaux et/ou cylindres, sont intégrés comme sources d'énergie dans le dispositif (1).

8. Procédé de revêtement d'une pièce (7) avec une bande de matériau (2) utilisant le dispositif selon l'une des revendications précédentes, le procédé comprenant les étapes suivantes :
- amenée de la pièce (7) et de la bande de matériau (2) dans un dispositif de revêtement (1) par l'intermédiaire d'au moins un système de renvoi (5, 6),
- activation d'une couche de colle (3), qui se trouve sur la bande de matériau (2) et/ou qui est une partie de celle-ci, et
- application de la bande de matériau (2) sur la surface (8) de la pièce par l'intermédiaire de la couche de colle activée (3) à l'aide d'au moins un système d'appui (40),
la couche de colle étant activée et/ou réactivée juste avant l'application de la bande de matériau (2) dans la zone de la surface (45) du système d'appui (40) avec au moins une source d'énergie, l'expression « dans la zone de la surface (45) du système d'appui (40) » signifie que c'est la partie de la bande de matériau (2) qui se trouve au moins par endroits en contact avec le système d'appui (40) qui est activée,
**caractérisé en ce que**
par le positionnement d'un système de renvoi réglable (30) par rapport au système d'appui (40), on effectue une modification de la surface de contact de la bande de matériau (2) avec le système d'appui (40) par l'intermédiaire d'un angle d'enroulement (44).

9. Procédé de revêtement d'une surface de pièce selon la revendication 8, **caractérisé en ce que** l'on utilise une colle thermoplastique, notamment une colle à fusion.

10. Procédé de revêtement d'une surface de pièce selon la revendication 8 ou 9, **caractérisé en ce que**
on applique la couche de colle (3) après amenée de la bande de matériau (2) avec un dispositif applicateur de colle (10), la couche de colle (3) étant appliquée de préférence avec une buse (14) en petites quantités de moins de 30 g/m² sur la bande de matériau (2).

11. Procédé de revêtement d'une surface de pièce selon la revendication 10, **caractérisé en ce que**
après l'application de la couche de colle (3), on conduit la bande de matériau (2) avec le côté de la couche de colle appliquée (3) à travers un dispositif de refroidissement destiné à un refroidissement supplémentaire (20), notamment un arbre creux, la couche de colle (3) étant soumise à un souffle, de préférence d'air comprimé sec sans graisse, par l'intermédiaire de trous (23) dans la surface (22) de l'arbre creux (20).

12. Procédé de revêtement d'une surface de pièce selon l'une des revendications 8 à 11, **caractérisé en ce que**
la bande de matériau (2) avec le côté de couche de colle est conduite sur le système de renvoi (30).

13. Procédé de revêtement d'une surface de pièce selon l'une des revendications 8 à 12, **caractérisé en ce que** le système d'appui (40) est chauffé par l'intermédiaire d'au moins une source d'énergie à une température favorable à l'activation de la couche de colle (3) puis à l'application sur la bande de matériau (2), de préférence de 100 °C à 250 °C.

14. Procédé de revêtement d'une surface de pièce selon l'une des revendications 8 à 13, **caractérisé en ce que**
on peut utiliser le procédé pour des surfaces larges, pour des surfaces étroites, pour un revêtement, effectué en une seule passe, de surfaces larges et de surfaces étroites ou dans le cadre d'un enveloppement de profilé, de préférence dans des machines fixes telles que notamment des presses à membrane ou dans des machines continues.
